Europäisches Patentamt

European Patent Office

Office européen des brevets

(19)

(11) Publication number: **0 099 414**
**B1**

(12)

# EUROPEAN PATENT SPECIFICATION

(45) Date of publication of patent specification: **01.06.88**

(51) Int. Cl.⁴: **B 60 N 1/08**

(21) Application number: **82106455.7**

(22) Date of filing: **17.07.82**

(54) Vehicle seat track apparatus.

(43) Date of publication of application:
**01.02.84 Bulletin 84/05**

(45) Publication of the grant of the patent:
**01.06.88 Bulletin 88/22**

(84) Designated Contracting States:
**DE FR GB IT NL SE**

(56) References cited:
**DE-A-2 810 870**
**DE-A-2 836 004**
**DE-A-2 851 565**
**GB-A-2 032 266**
**GB-A-2 035 713**
**GB-A-2 074 020**
**US-A-2 839 124**
**US-A-2 924 265**
**US-A-3 174 715**

(73) Proprietor: **ITT INDUSTRIES INC.**
**320 Park Avenue**
**New York, NY 10022 (US)**

(72) Inventor: **Russo, Vincenzo (NMN)**
**3020 Warwick Road**
**Jackson Michigan 49203 (US)**
Inventor: **Heesch, Max Otto**
**2611 Vineyard Lane**
**Brooklyn Michigan 49230 (US)**

(74) Representative: **Frigger, Heinz, Dipl.-Ing.**
**c/o Alfred Teves GmbH Guerickestrasse 7**
**Postfach 900120**
**D-6000 Frankfurt/Main 90 (DE)**

Courier Press, Leamington Spa, England.

## Description

### BACKGROUND OF THE INVENTION

The instant invention relates to a power seat track mechanism.

Apparatus for powered seat track adjustment or position setting of automotive seats are extremely well-known in the art. In most such track mechanisms, a unitary seat pan or seat cushion frame is mounted on the upper seat track for fore and aft movement under the control of a horizontal drive and for vertical movement of the forward and rear ends of the seat by operation of respective drives one for each seat end. The unitary seat pan includes the seat frame and seat cushion and back frame and back cushion. Thus, any movement of the seat frame and cushion causes like movement of both the back frame and back cushion, and any looseness in construction leads to a "chucking" condition prevalent in such mechanisms.

In U.S. Patent 2,924,265 issued February 9, 1960, the seat back is separated from the seat frame to prevent vertical movement of the seat back, while the seat frame and back are coupled together for horizontal motion. In this apparatus a single motor is used with solenoids actuatable to clutch the selected drive to the motor to drive the seat frame a seat back in a fore and aft direction and to drive the seat frame front and rear ends in a vertical direction. No additional seat back movement is disclosed by this reference.

Furthermore, there is priorly known a switching arrangement for controlling the drives of vehicle seats, in particular of the seat back and/or the seat cushion of automotive vehicles (German published patent application 28 36 004), wherein each seat part to be adjusted, especially the seat back and the seat cushion, is furnished with one shift lever of its own that is arranged and shaped alike the part it is to adjust, that means that the shift levers are formed alike the seat back and the seat cushion, respectively. The respective shift lever is movably supported to shift in the same direction as the vehicle part to be adjusted has to move for position setting. To this end, the shift levers are arranged on a carrier plate, the said carrier plate and the respective shift lever having positioning markers allocated to one another, in particular a position setting scale e.g. on the carrier plate and an associated marker on the respective shift lever. Each shift lever is in each of its directions of adjustment loaded by means of resetting members, in particular resetting springs, and, when the adjustment action has been completed, can be reset to assume its initial position by means of the resetting springs.

There is known a vehicle seat designed on a seat underframe (German published patent application 28 10 870) which is laterally displaceable on the underframe and/or whose seat surface is adjustable in height and/or whose seat surface is pivotable about a transverse axis and/or whose seat back is adjustable in its angular position relative to the seat surface and/or whose headrest mounted on the upper end of the back seat is movable fore and aft or is pivotable about a transverse axis, and with all these selectable positions of the individual adjustable seat parts being fixable in the position desired. To this effect, the adjustable seat parts are connected to one another and to the seat underframe by self-locking gears adjustable by servo force, with the said servo force being dimensioned such that the seat adjustment can be effected also when the seat is loaded. In this seat underframe, the gears are designed as bell crank gears.

Finally, U.S. patent 4,015,812, issued on April 5, 1977, which corresponds to the preamble of claim 1, discloses a seat adjuster, wherein the elongated slots are arranged at the front seat ends. Ensuing therefrom is that, when adjusting the seat height, there will also occur change of the angle of inclination of the back rest what means considerable impairment of the sitting comfort.

### SUMMARY OF THE INVENTION

The present invention, which is defined in the characterising part of claim 1, provides a seat track mechanism of generally conventional type having parallel seat tracks establishing the lateral sides of the mechanism. The mechanism produces four types of seat motion: vertical movement of the front edge of the seat, vertical movement of the rear edge of the seat, horizontal translatory movement of the seat and seat back, and pivotal motion of the seat back. These movements are all generated by lead screw mechanisms and individually driven by drives such as motor drives of any generally known conventional type.

Both vertical movements of the seat frame and cushion are produced by separate lead screws rotated by motor driven individual worm gears. Each lead screw travels within a threaded tubular member, the member being pivotally secured to one end of a link, the other end of the link being secured to a torsion bar rotated responsive to lead screw movement. A pivot arm on the torsion bar translates the rotary motion of the bar to move the seat support accordingly.

In accordance with the principles of the invention, a pivot connection is provided between a front link and the seat frame and a sliding pivot or lost motion connection is provided between a rear link and the rear portion of the seat frame such that when the front of the seat pan is raised, the seat pan moves in an arc toward the rear. This movement results in the occupant of the seat having the lumbar region of his back pressed into the seat back and greatly enhances seating comfort.

Two lead screws driven by a single motor are used to produce the horizontal movement, the lead screws being located parallel to the respective tracks. The lead screws are threaded within respective tubular openings of separate bracket members affixed to the upper tracks of the seat track structure. On operation of the horizontal drive motor, the seat track is advanced or retracted horizontally to carry the seat pan and seat back accordingly. A fourth motor is employed to pivot a seat back lead screw externally of the horizontal and vertical drives: the seat back drive lead screw rides within a threaded tube to advance and retract one end of a bell crank for pivoting the seat back alone.

It is therefore an object of the invention to provide an improved power-driven, eight-way seat track apparatus in which the movements are generated by five lead screws using threaded drive engagements.

It is a further object of the invention to provide a powered seat track structure for a vehicle with powered, fore and aft horizontal movement being generated by lead screws, each such lead screw driving a threaded member affixed to a horizontal track at the lateral edges of the seat, and with powered vertical individual drive structure for both the front and rear ends of the seat.

It is a further object of the invention to provide a powered seat apparatus in which individual front and rear torsion bars are rotated to provide the output vertical movement of respective ends of the seat frame and cushion and in which the back seat frame and cushion are independent of the seat frame vertical movement, the back frame being independently pivotal about a horizontal lateral axis.

It is a still further object of the invention to provide an eight-way powered seat apparatus for a vehicle using similar power transferring members to produce horizontal movement of the seat frame and seat back frame, with individual, transversely-spaced power transferring members acting on respective torsion bars to elevate and lower the respective ends of the front and rear seat ends and using a similar drive to pivot the seat back independently of the seat frame movement.

Other objects, features and advantages of the invention will become apparent from the following specification viewed in conjunction with the drawings which are described briefly next.

## BRIEF DESCRIPTION OF THE DRAWINGS

Figure 1 is a side view in elevation of a seat mechanism using our invention;

Figure 2 is a view of the mechanism viewed from the top thereof;

Figure 3 is a side elevational view of the apparatus of Figure 2;

Figure 4 is an end view of the apparatus of Figure 2 viewed from the front thereof;

Figure 5 is a section partial view in elevation of the rear portion of the seat back drive as viewed in Figure 2 at one extreme condition; and

Figure 6 is a view similar to Figure 5 showing the seat back drive at the condition opposite that of Fig. 5.

## DETAILED DESCRIPTION OF THE DRAWINGS

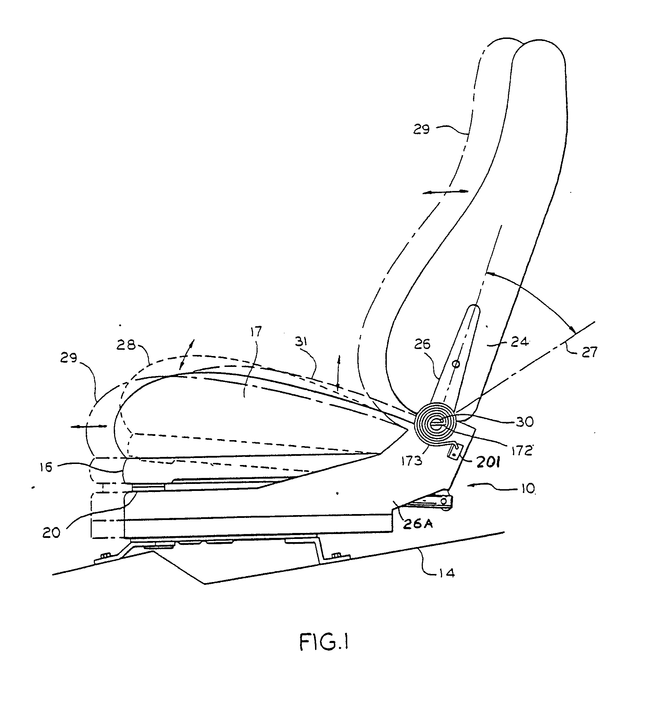

Figure 1 shows an adjustable seat mechanism 10 for a seat structure mounted with respect to the floor of an automobile as shown by dashed line 14.

The seat structure preferably includes a rigid seat pan or seat frame 16 which may be metal or molded plastic. The pan or seat frame 16 supports the seat cushion 17 and is secured to the respective upper seat track assembly 20 of a seat track mechanism of the type shown generally by U.S. Patent 4,015,812 issued April 15, 1977 — Heesch. The pan or frame 16 and its mounting provides the structural strength and rigidity to enable the mechanism to withstand shock loading and meet the present test specifications.

The mounting engagement between the upper seat track 20 and the seat frame 16 allows selective vertical movement of the seat frame under the control of a conventional control button arrangement (not shown). The upper seat track 20 is also capable of fore and aft movement under selective control.

The seat back 24 is secured to the upper seat track assembly 20 for fore and aft movement with the seat track by means of a rigid bracket 26. The bracket 26 which controls pivotal movement of the seat back is pivoted by screw and nut drive of a seat back control about a pivot axis, as will be explained. This movement of the seat back from the full up position shown in Fig. 1 allows a maximum of 50 to 60° of arc travel between the full up position as shown and the full down position represented by line 27.

As shown in Figure 1, the seat frame 16 is capable of fore and aft translatory movement from the rearward position shown by solid lines to the forward position shown by dashed line 29. The seat cushion borne by the frame is movable from the lowered condition shown by solid lines to a front end raised condition shown by dashed line 28; and/or a rear end raised condition shown by dashed line 31, (both dashed lines being shown with the seat frame in its retracted condition). The seat back frame is pivotal about the axis 30 of bracket 26 to the position shown by dashed line 27, the seat back 24 also being movable in a fore and aft sense with the seat frame.

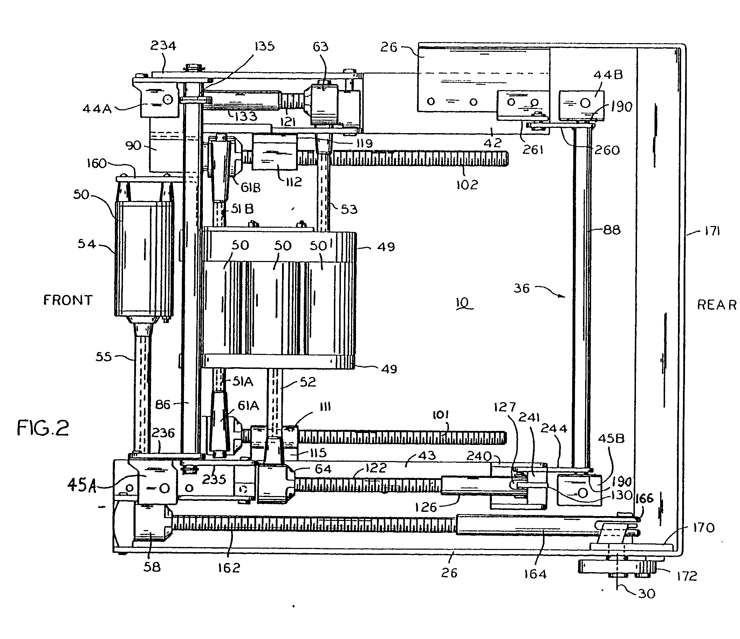

Figures 2—4 show in greater detail the mechanism 10 employing a preferred embodiment of my invention. The mechanism 10 has two transversely-spaced generally U-shaped structural mounting base rails 32 and 33, each of which is suitably affixed by bolts or the like to front and rear respective beams or brackets 34, the beams being secured permanently to the floor 14 of the vehicle. The two base rails 32 and 33 are parallel to one another and are spaced a lateral distance from one another to receive and form the stationary support for a vehicle seat on the two rails.

The major structural elements of the mechanism 10 are the respective stationary mounting base rails 32 and 33, and a carriage 36 longitudinally translatable along the rails. The carriage is generally comprised of two spaced apart upper seat tracks 42 and 43, each upper track being engaged with a like base rail 32 and 33 in a tracked relationship allowing horizontal front to rear movement of the upper tracks. Seat securing brackets 44 A and B and 45 A and B rest above the tracks of the mechanism and are coupled to the ends of the seat pan or frame 16. The front brackets 44 A and 45 A are pivoted jointly to raise the front end of the seat frame, the rear brackets 44B and 45B are pivoted jointly to raise the rear seat end. The brackets 44 and 45 support the seat pan 16 to raise or lower the seat ends accordingly. Controlled drive, translatory motion of the carriage 36 in response to selection at control devices (not shown) produces longitudinal movement of the seat track in a fore and aft sense. Other controls (not shown) produce selective vertical movement of either the front or the rear end of the seat securing brackets 44 and 45 and consequent movement of the front and/or rear end of the seat, respectively.

In Figures 2—4, I show a drive for the mechanism using four, single-armature motors 50 of a type well-known in the art. Some of the motors (three, as shown) may have a common rigid housing or casing 49 with suitable end bell structure enclosing respective output drive shafts 51, 52 and 53, for the fore and aft drive, front vertical drive and rear vertical drive respectively. Shaft 51 has a portion 51 A extending from one end of its motor and a portion 51 B extending from the other end thereof. A separate motor 54 is used to drive the output shaft 55 for the seat back movement. The four motors i.e., motor 54 and the three motors in common housing 49, are supported intermediately in the mechanism 10 between the mounting base rails and are supported on the upper tracks for movement therewith through a suitable mounting platform 90 carrying brackets 160. Suitable other motor-controlled drives such as a single motor with four individually selectable clutch drive shafts or four separate motors mounted (in parallel with one another) could also be used. In any event, there would be an output shaft from each motor-controlled drive. The four output shafts 51, 52, 53 and 55 of the motor drives are connected to respective driven assemblies in a known manner.

The motor drive output armature or shafts 51, 52, 53, and 55 are each engaged to and rotate an internal drive within an enclosing flexible tube, the cable and tube being of known design (the cable within a tube herein being generally called a shaft). The internal cable for each shaft may in any conventional manner rotate a suitable driven gear (not shown) within the enclosing socket e.g., 58, of a respective gear box. Each gear box may be of the type shown in U.S. Patent 3,951,004 to M. Heesch, which issued April 20, 1976. Five such gear boxes or transmissions are provided, all mounted on the upper track or carriage. Two boxes 61A and 61B are provided, one on each lateral side of the mechanism shown in Fig. 2, and are driven by the horizontal shaft portions 51 A and 51 B at each lateral end of the motor. The gear boxes of the drive assemblies of Fig. 2 (viewed from the front) are called the left track horizontal gear box 61B, right track horizontal gear box 61A, front vertical gear box 63, rear vertical gear box 64 and seat back gear box 58 herein are essentially identical in internal construction and operation.

The engagement of each shaft cable with the driven shaft within the socket of the gear box controls the rotation of gearing (not shown) within the gear box to produce output rotation of a lead screw responsive to rotation of the respective motor driven shaft.

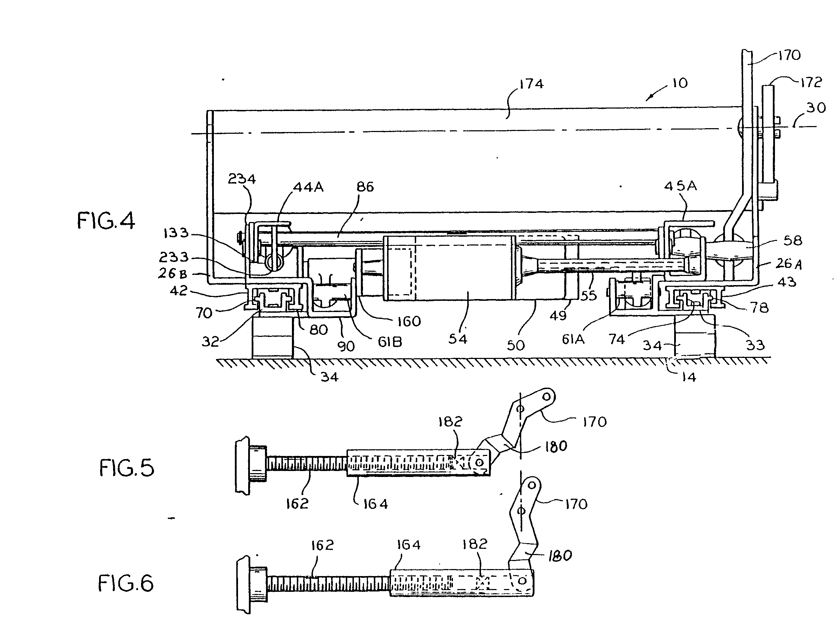

As seen best in Fig. 4, each stationary mounting base rail 32 and 33 of the apparatus is a unitary, rigid structural member having a generally U-shaped cross section with stepped, outwardly directed flanges 70. The web 72 of the base rail is supported on the mounting brackets 34 at both the front and the rear. Suitable apertures or mounting holes (not shown) in the brackets 34 allow the base rails 32 to be mounted to a suitable floor support structure of the vehicle.

The sides 74 of the U-shape of the mounting base rail (shown best in Fig. 4) are parallel and terminate in outwardly facing horizontal flange members 70. Suitable plastic guides 78 provided with longitudinal slots slidably receive these flange members to provide a series of continuous sliding members between the flange members 70 of the rails 32 and 33, and engage the inwardly extending channel slide track members 80 of upper seat tracks 20 within which these guides are tracked. The track members 80 essentially comprise a unitary beam in an inverted U-shaped form, with inwardly disposed channel flanges supporting the plastic slide guides.

As seen best in the plan view of Fig. 2, the carriage 36 includes the motor drive structure mounted on the two transversely spaced-apart slide tracks 42, 43 and movable jointly relative to the stationary rails 32 and 33 in a fore and aft or front to rear sense. The carriage structure further includes a transverse platform structure 90 including a bracket 160 affixing the motors midway between the tracks 42 and 43. A front torsion bar 86 and a rear torsion bar 88 are laterally disposed at respective ends of the tracks 42 and 43. The torsion bars are each mounted to the tracks 42 and 43 to span the space between the tracks at the respective front and rear of the carriage and brace the structure. Pivotally linked to the torsion bars are seat securing brackets 44 A and B and45 A and B which are positioned above the respective tracks.

The sliding upper tracks 42, 43 also act as the mounting support for platforms for the gear boxes 61 A, 61 B controlling horizontal drive. The upper seat tracks support gear box 58 for the seat back and rear and front vertical seat drives 63 and 64. As seen best in Figure 2, the fore and aft drive shafts 51 are generally coaxial each coupled to respective gear boxes 61 A and 61 B to rotate the respective output screws 101 and 102 for the fore and aft drive. These screws 101 and 102 are cantilevered rearwardly from their driven coupling in the respective gear boxes 61 A and 61 B.

Each of the horizontal drive screws 101 and 102 are threaded within a drive block or nut 111 and 112, the drive blocks being secured to the lower stationary rails 32, 33. Thus, the blocks 111, 112 are stationary and the lead screws are advanced or retracted on operation of the fore and aft motor and shafts 51 and 52. Each drive block 111 and 112 has a fore and aft threaded tube with a horizontally extending integral cover bracket 114 and 115 respectively. The cover bracket is secured to the lower stationary rails so that on rotation of the fore and aft motor, both shafts are rotated to advance or retract relative to the drive blocks 111 and 112 and move the upper tracks and carriage 36 accordingly. The upper tracks slide relative to the lower stationary rails through the medium of the plastic guides, as mentioned previously.

The vertical drive is implemented through shaft 53 for the front end of the seat and shaft 52 for the rear end of the seat. Each shaft 53, 52 has a gear box or gear housing 63, 64 coupled to it for causing rotation of respective lead screws 121 and 122).

The front drive gear box 63 has extending in a forward direction therefrom the drive screw 121. Drive screw 121 is rotated responsive to rotation of motion shaft 53 in a known fashion. An internally threaded tube or nut 133 receives the free end of drive screw 121. As shown best in Fig. 4, the front end of tube 133 has a central axial slot 233. Slot 233 provides a clearance opening within which there is disposed a link 135. The lower end of link 135 includes an aperture through which a pivot pin is inserted such that the lower end of link 135 is pivotally connected to tube 133 in slot 233. Link 135 includes a second aperture in its middle through which torsion bar 86 extends. Link 135 is firmly affixed to torsion bar 86 by welding or the like. Torsion bar 86 is pivotally connected at one end to bracket 234 which in turn is fixedly mounted to upper seat track 42. Torsion bar 86 is pivotally connected at its other end to bracket 235 which in turn is fixedly mounted to upper seat track 43. The upper end of link 135 is pivotally connected to bracket 44A. A slave link 236 is firmly affixed to the other end of torsion bar 86 and pivotally connected to bracket 45A.

The rear drive gear box 64 has extending rearwardly therefrom, a drive screw 122. This drive screw 122 is rotated responsive to rotation of motor shaft 52 in known fashion. An internally threaded tube 126 or nut member receives the free end of lead screw 122, and is advanced or retracted in response to rotation of the lead or drive screw 122. At its rearward end, tube 126 has a central axial slot 127. This slot 127 provides a clearance opening within which there is pivotally fitted a link 130, the link being pinned pivotally diametrally to the tube 126 at a pin. The link 130 is mounted pivotally so that the lower end of the link is advanced or retracted responsive to rotation of the lead screw. At its other end, the link 130 is firmly affixed as by welding or the like, to the outside of a sleeve 241. Sleeve 241 is pivotally connected to bracket 240 which is mounted to upper track 43, a link 244 is firmly affixed to sleeve 241 and to torsion bar 88. Thus on rotation of the lead screw 122, link 130 is rotated to rotate link 244 which in turn rotates torsion bar 88. The operation of torsion bars is described in U.S.

Patent 4,015,812 issued April 5, 1977. The other end of torsion bar 88 is firmly affixed as by welding to one end of slave link 260. The other end of link 260 is pivotally connected to bracket 261 which in turn is affixed to track 42.

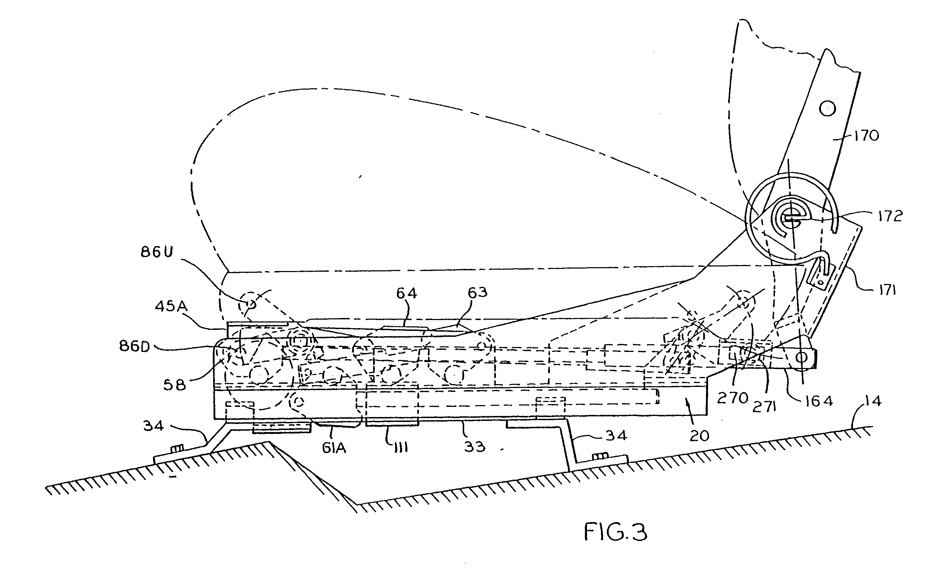

Rear seat pan brackets 44 B and 45 B are pivotally connected to torsion bar 88. A lost motion connection 190 is provided between each bracket 44 B, 45 B and the torsion bar 88. This connection, best shown in Fig. 3, on bracket 45 B is provided by a horizontal slot 270 in bracket 45 B in which the rear torsion bar 88 is pivotally pinned by a C ring 271. This lost motion connection 190 is provided only at the rear of the seat and not at the front. By this arrangement, rotary motion of the link arms 244 and 260 is translated into essentially vertical motion of the rear portion of the seat pan 16 and seat cushion 17. By providing a lost motion connection at the rear of the seat pan 16 and by providing a pivot connection at the front of the seat pan 16, an advantageous effect is obtained. More specifically, as the seat front is raised, it is raised not entirely vertical, but through an arc toward the back seat. Thus, as the front of the seat is raised, the entire seat pan 16 and cushion 17 are moved rearward. With this movement the lumbar region of the back of the seated person is pressed into the back seat back 24. This pressure has been observed to greatly enhance the seating comfort.

Movement of the seat back is controlled by motor 54. Motor 54 is affixed to motor structure 49 by bracket 160 for movement with the carriage in a fore and aft sense. Motor 54 on operation rotates shaft 55 to gear box 58. Gear box 58 is mounted on the upper seat track externally and independently of any connection to the elevating brackets 45 A and 45 B. Rotation of shaft 55 causes rotation of lead screw 162. The lead screw 162 is threaded and mates with an internally threaded tubular sleeve 164. The sleeve 164 has a bifurcation 166 in its end remote from motor 54 and is pivotally pinned to the lower end of a pivot arm 170. The upper end of arm 170 is secured to the seat above the pivot axis 30 of the seat, the seat back being pivotally secured to the back support structure 171 at pivot axis 30. Mounted on the pivot axis 30 is a coiled torsion spring 172 which functions as an assist spring, the spring outer end being affixed to the side limb 26A of bracket 26 as by clip 201.

The seat back support 171 comprises a lateral bracing bar 174 extending across the entire seat back and integrally formed downwardly angled brackets 26A, 26B. The bracket limbs 26A and 26B are secured on the upper seat tracks 43 and 42, respectively as seen best in Fig. 4.

In Figs. 5 and 6, I show one method of limiting the movement of the pivot arm 170 relative to the threaded receiver tube 164 of the seat back positioning mechanism. In Figure 5, the full down position, the threaded drive screw has entered the mating threaded tube to its maximum amount. Abutting against the lower end 180 of the pivot arm 170 is a floating slug 182 whose other end is

engaged by the end of the threaded drive screw. Thus, the limit of movement of the drive screw and pivot arms are established.

In Fig. 6, a partially up position of the seat back is shown, in which the slug is floating within the threaded tube. The distance between the end of the screw and drive link in the full down position can be calculated. A hardened steel slug 182 cut to the required length is inserted in the drive nut or threaded tube 164, as shown. The slug is held captive in the drive nut by the screw 162 at one end and the drive link 170 on the other end. To vary the "down stop" position, the slug length may be changed. The slug will not cause the screw to jam as the thread angle should be great enough to back off quickly. This method of stopping under a lumped seat cushion or back rest prevents the distortion and/or deflection of links, pivots, etc.

As viewed in Fig. 3, the mechanism is shown in its rearmost position from which the mechanism is movable as much as seven inches (17.78 cm) to a forwardmost position (not shown).

Further in Fig. 3, the axis of the front torsion bar 86 is shown in the full down position designated by numeral 86 D and in its fully up position designated by numeral 86 U. In Fig. 3, it can be seen that the axis of 86 D is forward of the axis of 86 U by a distance of about two inches (5.08 cm). This offset distance is an indication that as the front end is raised the entire seat frame is moved rearwardly a distance of about one half inch (1.27 cm). The lost motion connection 190 between the seat frame and the torsion bar control bracket allows this movement. The rearward movement exerts pressure on the lumbar area of the back of a person sitting in the seat. Relief of this pressure may be obtained by moving the seat back accordingly.

**Claims**

1. A power seat track mechanism (10) for horizontally moving the seat of a motor vehicle composed of seat bottom frame (16) and seat back (24) in a forward and rearward sense and for vertically elevating and lowering the front end and the rear end of the seat bottom frame (16) independently of each other, the mechanism including laterally spaced apart rail members (32, 33) secured to the vehicle bottom and guiding a carriage (36) in horizontal direction, with a first torsion bar (86) which is arranged at the front end of the seat transversely to the horizontal direction of movement and which is pivotally mounted on the carriage (36, 234, 235), while links (136, 236) are affixed to the torsion bar and are pivotally mounted on the front end of the seat bottom frame (16) so that rotation of the torsion bar (86) in a predetermined direction is transferred into a combined upward and rearward longitudinal movement of the front end of the seat bottom frame (16), comprising a second torsion bar (88) which is arranged at the rear end of the seat transversely to the horizontal direction of movement, while links (244, 260) affixed to the torsion bar are pivotally mounted on the carriage (36) and on the rear end of the seat bottom frame (16) so that the rotary movement of one link (244) in a predetermined direction about its pivot on the carriage (36) is transferred into a vertical movement of the rear end of the seat bottom frame (16), and comprising motor drive means (50) consisting of several separate motors, with a first motor driving the lead screw mechanism (53, 63, 121, 133, 135) of the first torsion bar (86) and a second motor driving the lead screw mechanism (52, 64, 122, 126, 130, 241) of the link (244) which latter is coupled to the second torsion bar (88), characterised in that the pivots of the links (244, 260) of the second torsion bar (88) are guided in elongated slots (190, 270) at the rear end of the seat, with the said torsion bar (88) interconnecting its associated links (244, 260) in the axis of the pivots at the rear end of the seat, and in that the seat back (24) is arranged pivotally on the carriage (36), with the drive of the pivot arrangement (55, 58, 162, 164, 170) being performed by means of another motor (54), so that the seat back can be inclined independently of the seat bottom frame (16).

2. A power seat track mechanism as claimed in claim 1, characterised in that the links (136, 236) of the first torsion bar (86) are pivotally mounted in brackets (44A, 45A) which are secured at the front end of the seat.

3. A power seat track mechanism as claimed in claim 1, characterised in that the second torsion bar (88) is pivotally mounted in brackets (44B, 45B) which are secured at the rear end of the seat, the said brackets receiving the elongated slots (190, 270).

4. A power seat track mechanism as claimed in claim 1, characterised in that the first motor turns a first lead screw (121) via a first worm gear (63), while a cylinder (133) with internal thread which is screwed onto the lead screw engages at a link (135) which is affixed to the first torsion bar (86), and in that the second motor actuates a second lead screw (122) via a second worm gear (64), while a cylinder (126) with internal thread which is screwed onto the lead screw engages at an end (130) of a link (244) of the second torsion bar (88), the said end being extended beyond the pivot on the carriage.

5. A power seat track mechanism as claimed in claims 2 and 3, characterised in that the brackets (44A, 45A and 44B, 45B) are provided in pairs at the front and rear end of the seat, with the brackets of one pair each being secured laterally below the seat.

**Patentansprüche**

1. Eine automatische Sitzverstelleinrichtung (10), mit der der aus Sitzfläche (16) und Sitzlehne (24) bestehende Sitz eines Kraftfahrzeuges horizontal vor und zurück geschoben wird und das vordere und hintere Sitzflächenende (16) jeweils unabhängig voneinander vertikal auf und ab bewegbar ist, mit seitlich angeordneten, voneinander beabstandeten und am Fahrzeugboden befestigten Schienen (32, 33) die einen Schlitten (36) in horizontaler Richtung führen, mit einem ersten Drehstab (86), der am vorderen Sitzende quer zur horizontalen Bewegungsrichtung angeordnet und drehbar am Schlitten (36, 234, 235) gelagert ist, wobei fest mit dem Drehstab verbundene Arme (136, 236) drehbar am vorderen Sitzflächenende (16) gelagert sind, so daß eine Drehung des Drehstabes (86) in eine bestimmte Richtung in eine kombinierte Aufwärts- und Rückwärtslängsbewegung des vorderen Sitzflächenendes (16) übersetzt wird, mit einem zweiten Drehstab (88), der am hinteren Sitzende quer zur horizontalen Bewegungsrichtung angeordnet ist, wobei fest mit dem Drehstab verbundene Arme (244, 260) am Schlitten (36) und am hinteren Sitzflächenende (16) drehbar gelagert sind, so daß die Drehbewegung eines Arms (244) in eine bestimmte Richtung um seinen Lagerpunkt am Schlitten (36) in eine vertikale Bewegung des hinteren Sitzflächenendes (16) übersetzt wird, und mit einer aus mehreren Einzelmotoren bestehenden Motoreinheit (50), wobei ein erster Motor den Drehmechanismus (53, 63, 121, 133, 135) des ersten Drehstabes (86) und ein zweiter Motor den Drehmechanismus (52, 64, 122, 126, 130, 241) des Arms (244), der mit dem zweiten Drehstab (88) verbunden ist, antreiben, dadurch gekennzeichnet, daß die Lager der Arme (244, 260) des zweiten Drehstabs (88) am hinteren Sitzflächenende in Langlöchern (190, 270) geführt sind, wobei der Drehstab (88) die ihm zugeordneten Arme (244, 260) in der Achse der Lager am hinteren Sitzflächenende verbindet, und daß die Sitzlehne (24) schwenkbar am Schlitten (36) angeordnet ist, wobei der Antrieb des Schwenkmechanismus (55, 58, 162, 164, 170) mit Hilfe eines weiteren Motors (54) erfolgt, so daß die Sitzlehne unabhängig von der Sitzfläche (16) verstellt werden kann.

2. Eine automatische Sitzverstelleinrichtung nach Anspruch 1, dadurch gekennzeichnet, daß die Arme (136, 236) des ersten Drehstabes (86) drehbar in Schuhen (44A, 45A), gelagert sind, die am vorderen Sitzflächenende befestigt sind.

3. Eine automatische Sitzverstelleinrichtung nach Anspruch 1, dadurch gekennzeichnet, daß der zweite Drehstab (88) drehbar in Schuhen (44B, 45B) gelagert ist, die am hinteren Sitzende befestigt sind, wobei diese Schuhe die Langlöcher (190, 270) aufnehmen.

4. Eine automatische Sitzverstelleinrichtung nach Anspruch 1, dadurch gekennzeichnet, daß der erste Motor über ein erstes Schneckengetriebe (63) eine erste Führungsschraube (121) dreht, wobei ein Zylinder (133) mit Innengewinde, der auf die Führungsschraube aufgedreht ist, an einem Verbindungsstück (135) angreift, das fest mit dem ersten Drehstab (86) verbunden ist, und daß der zweite Motor über ein zweites Schneckengetriebe (64) eine zweite Führungsschraube (122) betätigt, wobei ein Zylinder (126) mit Innengewinde, der auf die Führungsschraube aufgedreht ist, an ein über der Drehpunkt am Schlitten verlängertes Ende (130) eines Arms (244) des zweiten Drehstabs (8) angreift.

5. Eine automatische Sitzverstelleinrichtung nach Anspruch 2 und 3, dadurch gekennzeichnet, daß die Schuhe (44A, 45A und 44B, 45B) am vorderen und hinteren Sitzende paarweise vorhanden sind, wobei die Schuhe eines Paares jeweils seitlich unter der Sitzfläche befestigt sind.

**Revendications**

1. Mécanisme motorisé de glissières de siège (10) pour déplacer horizontalement le siège d'un véhicule à moteur, constitué d'un châssis de partie inférieure de siège (16) et d'un dossier de siège (24), en avant et en arrière et pour lever et abaisser verticalement l'extrémité avant et l'extrémité arrière du châssis de partie inférieure de siège (16) indépendamment l'une de l'autre, ce mécanisme comprenant des éléments de rail espacés latéralement (32, 33) fixés au plancher du véhicule et guidant un chariot (36) dans le sens horizontal, une première barre de torsion (86) étant disposée à l'extrémité avant du siège, transversalement au sens de déplacement horizontal et étant montée de manière pivotante sur le chariot (36, 234, 235), tandis que des éléments de liaison (136, 236) sont fixés à la barre de torsion et sont montés de manière pivotante à l'extrémité avant du châssis de partie inférieure de siège (16), de sorte que la rotation de la barr de torsion (86) dans une direction prédéterminée est convertie en un mouvement longitudinal combiné, vers le haut et vers l'arrière, de l'extrémité avant du châssis de partie inférieure de siège (16), comprenant une seconde barre de torsion (88) qui est disposée à l'extrémité arrière du siège, transversalement au sens horizontal de déplacement, des éléments de liaison (244, 260) fixés à la barre de torsion étant montés de façon pivotante sur le chariot (36) et à l'extrémité arrière du châssis de partie inférieure de siège (16), de sorte que le mouvement de rotation de l'un des éléments de liaison (244) dans une direction prédéterminée autour de son pivot monté sur le chariot (36) est converti en un mouvement vertical de l'extrémité arrière du châssis de partie inférieure de siège (16), et comprenant des moyens d'entraînement à moteur (50) consistant en plusieurs moteurs séparés, un premier moteur entraînant le mécanisme à tige filetée (53, 63, 121, 133, 135) de la première barre de torsion (86) et un second moteur entraînant le mécanisme à tige filetée) (52, 64, 122, 126, 130, 241) de l'élément de liaison (244), ce dernier étant relié à la seconde barre de torsion (88), caractérisé en ce que les pivots des éléments de liaison (244, 260) de la seconde barre de torsion (88) sont guidés dans des fentes allongées (190, 270) pratiquées à l'extrémité arrière du siège, ladite barre de torsion (88) reliant entre eux ses éléments de liaison correspondants (244, 260) dans l'axe des pivots à l'extrémité arrière du siège, et en ce que le dossier de siège (24) est monté de manière pivotante sur le chariot

(36), l'entraînement de l'agencement de pivotement (55, 58, 162, 164, 170) étant réalisé au moyen d'un autre moteur (54), de sorte que le dossier de siège peut être incliné indépendamment du châssis de partie inférieure de siège (16).

2. Mécanisme motorisé de glissières de siège conforme à la revendication 1, caractérisé en ce que les éléments de liaison (136, 236) de la première barre de torsion (86) sont montés de manière pivotante dans des pattes (44A, 45A) qui sont fixées à l'extrémité avant du siège.

3. Mécanisme motorisé de glissières de siège conforme à la revendication 1, caractérisé en ce que la seconde barre de torsion (88) est montée de manière pivotante dans des pattes (44B, 45B) qui sont fixées à l'extrémité arrière du siège, les fentes allongées (190, 270) étant pratiquées dans lesdites pattes.

4. Mécanisme motorisé de glissières de siège conforme à la revendication 1, caractérisé en ce que le premier moteur fait tourner une première tige filetée (121) par l'intermédiaire d'une première vis sans fin (63), un cylindre (133) muni d'un filet intérieur vissé sur la tige filetée coopérant avec un élément de liaison (135) qui est fixé à la première barre de torsion (86), et en ce que le second moteur actionne une seconde tige filetée (122) par l'intermédiaire d'une seconde vis sans fin (64), un cylindre (126) muni d'un filet intérieur vissé sur la tige filetée coopérant avec l'une des extrémités (130) d'un élément de liaison (244) de la seconde barre de torsion (88), ladite extrémité s'étendant au-delà du pivot du chariot.

5. Mécanisme motorisé de glissières de siège conforme aux revendications 2 et 3, caractérisé en ce que les pattes (44A, 45A et 44B, 45B) sont disposées par paires à l'extrémité avant et à l'extrémité arrière du siège les pattes de l'une des paires étant chacune fixées latéralement sous le siège.

FIG.1

FIG.2

FRONT

REAR

0 099 414

FIG.3

FIG.4

FIG.5

FIG.6